# EUROPEAN PATENT APPLICATION

(11) **EP 3 650 191 A1**
(43) Date of publication of application: **13.05.2020**
(21) Application number: 18204722.5
(22) Date of filing: 06.11.2018
(51) Int. Cl.: B29C 45/14, B32B 27/12, B32B 3/06

(54) **MOLDED COMPOSITE ARTICLE, METHOD FOR THE PRODUCTION THEREOF AND USE THEREOF**

(71) Applicant: Covestro Deutschland AG, 51373 Leverkusen (DE)
(72) Inventor: The designation of the inventor has not yet been filed
(74) Representative: Levpat

(57) **Abstract**

The invention relates to a molded composite article and method for the production thereof and use thereof. The molded composite article provided by the present invention comprises a plate member (720) and a resin member (710), wherein said plate member comprises a plate body and a joint end, the plate body comprises a first surface layer base material, a core layer and a second surface layer base material, the core layer (740) is positioned between the first surface layer base material (730, 750) and the second surface layer base material (730, 750), the joint end is positioned at a side end of the plate body, the joint end comprises an extension part of the first surface layer base material, and at least a portion of the joint end does not comprise the second surface layer base material at the position corresponding to the extension part of the first surface layer base material, the joint end is bonded to a side end of the resin member. Wall thinning, good appearance, high bonding strength, recyclability and high yield of production can be obtained by the technical solution provided by the present invention.

## Description

### Technical field

The present invention relates to the field of composite materials, in particular a molded composite article, especially a molded composite article comprising a plate member and a resin member, as well as to a method for the production thereof and use thereof.

### Background art

It is a growing trend that products such as various electronic and electrical devices, for example, personal computers, telephones and electronic entertainment gadgets are becoming more and more mobile and miniaturized. The housings of these devices are required to have small size, thin wall and light weight, as well as have mechanical properties such as high strength and high rigidity. Moreover, they have to satisfy requirements for structural, electrical signaling and magnetic applications.

Subjected to external loads, the housings must stay against deformation so that no damage of itself or the internal components due to squeezing occurs. The housing usually needs several additional structural components, such as snap joints, bosses, ribs, etc. These structural components often have to be obtained via processes such as injection molding of thermoplastic materials. Some parts of a housing are also required to meet the requirements for electrical and magnetic properties. For example, the housing should not shield or at least affect obviously the electrical and magnetic signal at the locations where it transmits.

Housings can usually be realized by compositing materials of different properties. On the one hand, reinforced composite plates are used in some parts in order to meet the strength requirements. On the other hand, injection molded materials are used where structural components or electromagnetic properties are needed.

CN101835596B discloses a molded composite article comprising a plate member and a resin member and having an undulating bonding interface at which the plate member and the resin member are bonded at side end faces thereof facing each other in an undulating form, in which the plate member is obtained by assembling of surface layer base materials positioned on an upper surface side and a lower surface side and a core layer base material positioned between the surface layer base materials, wherein a length of an actual bonding line formed along an undulation of the undulating bonding interface is 1.05 mm or more, per 1 mm length of a protrusion-connecting line which consists of successive and straight line segments connecting crests of the respective protrusions adjacent to each other in an undulation form of the respective surface layer base materials. However, the appearance quality of the molded composite article produced according to the technical solution, in particular, the appearance quality at the bonding interface is relatively poor. Extra processes such as polish are required for surface treatment. It results in a low yield of the final molded articles. In said technical solution, the surface layer base materials are formed of fiber-reinforced resin based on a thermosetting epoxy resin, which is not good for recycling of products and does not meet the increasingly high demands of environmental protection.

Therefore, it is still desired in the industry to find a solution to obtaining a wall thinning, good appearing housing composited by different materials of high bonding strength, recyclability and high yield of the final molded articles.

### Summary of the invention

One of the objects of the present invention is to provide a molded composite article. The molded composite article provided by the present invention comprises a plate member and a resin member, wherein the plate member comprises a plate body and a joint end, the plate body comprises a first surface layer base material, a core layer and a second surface layer base material, the core layer is positioned between the first surface layer base material and the second surface layer base material, the joint end is positioned at a side end of the plate body, the joint end comprises an extension part of the first surface layer base material, at least a portion of the joint end does not comprise the second surface layer base material at the position corresponding to the extension part of the first surface layer base material, and the joint end is bonded to a side end of the resin member.

Another object of the present invention is to provide a method for producing a molded composite article, wherein the molded composite article comprises a plate member and a resin member, the plate member comprises a plate body and a joint end, the plate body comprises a first surface layer base material, a core layer and a second surface layer base material, the core layer is positioned between the first surface layer base material and the second surface layer base material, the joint end is positioned at a side end of the plate body, the joint end comprises an extension part of the first surface layer base material, at least a portion thereof does not comprise the second surface layer base material at the position corresponding to the extension part of the first surface layer base material, and the joint end is bonded to a side end of the resin member. A method for producing a molded composite article according to the present invention comprises the steps of: obtaining the plate member, placing the plate member in a mold, closing the mold, injecting a resin and molding, opening the mold, and obtaining the molded composite article.

Still another object of the present invention is to provide a plate member. The plate member comprises a plate body and a joint end. The plate body comprises a first surface layer base material, a core layer and a second surface layer base material. The core layer is positioned between the first surface layer base material and the second surface layer base material. The joint end is positioned at a side end of the plate body. The joint end comprises an extension part of the first surface layer base material. At least a portion of the joint end does not comprise the second surface layer base material at the position corresponding to the extension part of the first surface layer base material.

Yet another object of the present invention is to provide a method for producing a plate member. The method for producing a plate member comprises the steps of: obtaining a plate comprising a first surface layer base material, a core layer and a second surface layer base material, with said core layer being positioned between the first surface layer base material and the second surface layer base material; and removing at least a portion of the second surface layer base material at a side end of the plate. Said removing may further comprise removing a portion of the thickness of the core layer at the position corresponding to said at least a portion of the second surface layer base material. The remaining portion of the core layer has a thickness of 0.05-0.1 mm, preferably 0.06-0.09 mm, more preferably 0.06-0.08mm.

Still another object of the present invention is the use of the plate member and the molded composite article provided by the present invention respectively in the production of electronic products.

It is yet another object of the present invention to provide an electronic product housing comprising a molded composite article provided according to the present invention.

Another object of the present invention is to provide an electronic product comprising an electronic product casing, said electronic product casing comprising a molded composite article provided by the present invention.

A portion of the joint end may further comprise a portion of the core layer that is bonded to the extension part of the first surface layer base material, wherein the portion of the core layer has a thickness of 0.05-0.1mm, preferably 0.06-0.09mm, more preferably 0.06-0.08mm.

The side end face of the extension part of the first surface layer base material may have an even surface or an undulating surface, and preferably may have an even surface when the first surface layer base material forms an outer surface of the plate member.

A portion of the joint end may further comprise an extension part of the second surface layer base material, wherein the side end face of the extension part of the second surface layer base material has an even surface or an undulating surface, and has preferably an undulating surface when the second surface layer base material forms an inner surface of the plate member. The distance between the crest of the protrusion and the trough of the recess of the undulating surface is 2-9 mm, preferably 3-8 mm, more preferably 4-6 mm.

The distance between the flat side end face or the crest of the undulating side end face of the second surface layer base material and the side end face of the extension part of the first surface layer base material is 0.5-1.5mm, preferably 0.8-1.2 mm, more preferably 0.9-1.1mm.

The first surface layer base material or the second surface layer base material is a carbon fiber reinforced polycarbonate plate. The carbon fiber reinforced polycarbonate plate comprises two or more polycarbonate preimpregnated tapes of unidirectional carbon fibers, with the two or more sheets being preferably arranged in such a manner that the fiber directions thereof are mutually orthogonal; or comprises one or more polycarbonate preimpregnated woven fabrics of carbon fibers tapes; or comprises one or more polycarbonate preimpregnated tapes of unidirectional carbon fibers and one or more polycarbonate preimpregnated woven fabrics of carbon fibers

A soft material can be selected for the core layer. When the first surface layer base material and the second surface layer base material are preferably formed of a fiber reinforced resin material respectively, a softer material is preferably selected for the core layer than the fiber reinforced resin forming said surface layer base materials.

The resin used for the resin member is preferably a thermoplastic resin.

The molded composite article provided according to the present invention shows a light weight, high strength, high rigidity, and thin wall, and is preferably used as a component of a portable electronic or electronic device such as a portable personal computer and a mobile phone. The molded composite article of the present invention is particularly preferably used as a casing material of the above devices.

### Description of Figures

Fig. 1 is a side and a top plan view of a plate member of a molded composite article in the prior art.
Figs. 2 - 5 are schematic views of plate members according to the present invention respectively.
Fig. 6 is a schematic view showing the structure of a plate for producing the plate member.
Fig. 7 is a schematic view of a molded composite article according to the present invention.

### Embodiments

The invention is now described for the purpose of illustration without limitation thereto. All numbers expressing quantities, percentages, and the like in the specification should be understood to be modified in all instances by the term "about", unless otherwise specified in a specific example.

The present invention provides a plate member, a molded composite article comprising the same, and method for the production thereof and use thereof. By way of removing a portion of the second surface layer base material at the joint end in the plate member having a sandwich layer structure, the bonding area between the plate member and the resin member is increased in the present invention, so that the bonding strength between the two members is greatly increased. Further, when the surface layer base material used as the outer surface has an even surface at the side end face of the joint end, the appearance of the molded composite article is well improved, and the yield of products is improved.

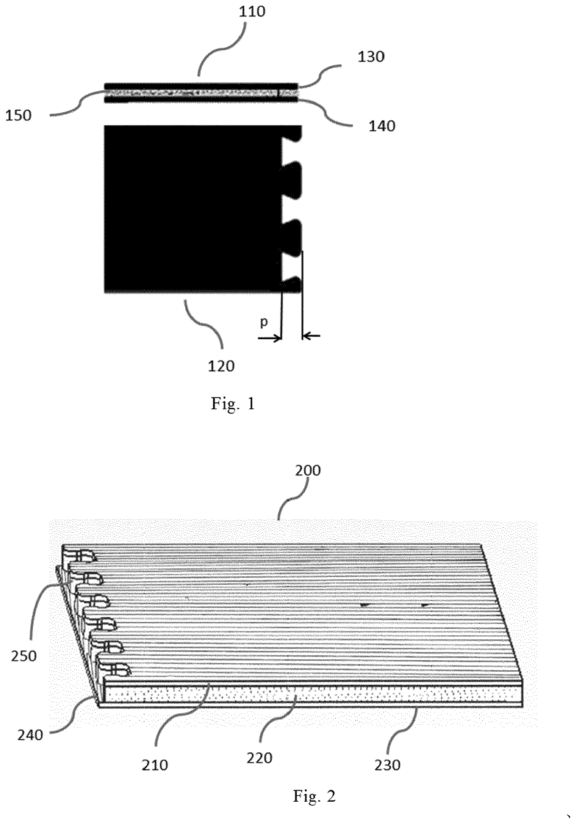

Fig. 1 is a schematic view showing a plate member of a molded composite article in the prior art. As shown in Fig. 1, 110 is a side view and 120 is a top view. The plate member in the prior art comprises surface layer base materials 130, 140 and a core layer 150. At the joint end of the plate member (shown as an undulating end in Fig. 1), the surface layer base material 130 at the position of recesses and the surface layer base material 140 and the core layer 150 at the position corresponding thereto are removed through. The side end faces of the surface layer base materials 130, 140 and the core layer 150 are all on the same undulating surface, and are bonded to the resin member by the undulating surface. Regardless of whether the surface layer base material 130 or 140 forms a surface of the final molded composite article, the bonding line between the plate member and the resin member is curved, which affects the appearance adversely and reduces the yield.

### Plate member

The present invention provides a plate member. The plate member comprises a plate body and a joint end, wherein the plate body comprises a first surface layer base material, a core layer and a second surface layer base material, the core layer is positioned between the first surface layer base material and the second surface layer base material, the joint end is positioned at a side end of the plate body, the joint end comprises an extension part of the first surface layer base material, and at least a portion of the joint end does not comprise the second surface layer base material at the position corresponding to the extension part of the first surface layer base material.

The plate member may have two or more joint ends.

At least a portion of the joint end may further comprises a portion of the core layer that is bonded to the extension part of the first surface layer base material at the joint end, wherein the portion of the core layer has a thickness of 0.05-0.1 mm, preferably 0.06-0.09 mm, more preferably 0.06-0.08 mm.

The side end face of the extension part of the first surface layer base material has an even surface or an undulating surface, and preferably has an even surface when the first surface layer base material forms an outer surface of the plate member. A portion of the joint end may further comprise an extension part of the second surface layer base material. The side end face of the extension part of the second surface layer base material has an even surface or an undulating surface, and the distance between the even surface or the crest of the undulating surface and the side end face of the extension part of the first surface layer base material is 0.5-1.5 mm, preferably 0.8-1.2 mm, more preferably 0.9-1.1 mm.

The first surface layer base material and the second surface layer base material are preferably formed of a fiber reinforced resin material respectively. The first surface layer base material or the second surface layer base material may be a carbon fiber reinforced polycarbonate sheet or woven fabric.

The reinforcing fibers in the fiber reinforced resin forming said surface layer base materials may include glass fibers, carbon fibers or the like, preferably carbon fibers. As the reinforcing fibers of the surface layer base materials, for example, metal fibers such as aluminum fibers, brass fibers, and stainless steel fibers; carbon fibers such as polyacrylonitrile-based, rayon-based, lignin-based, and pitch-based carbon fibers; inorganic fibers such as graphite fibers, glass fibers, silicon carbide fibers and silicon nitride fibers; organic fibers such as aramid fibers, poly(p-phenylene benzobisoxazole) (PBO) fibers, polyphenylene sulfide fibers, polyester fibers, acrylic fibers, nylon fibers, polyethylene fibers may be used. The above reinforcing fibers may be used singly or in combination of two or more. Carbon fibers are preferably used. The reinforcing fibers of the surface layer base materials may form sheets of reinforcing fibers composed of a plurality of layers containing reinforcing fibers, wherein the reinforcing fibers are preferably continuous reinforcing fibers. The continuous reinforcing fibers in the sheets of reinforcing fibers containing continuous reinforcing fibers may have a length of 10 mm or more. However, it is not necessary to be continuous in the entire sheet of reinforcing fibers, and it may be also interrupted. When a sheet containing reinforcing fibers is used as the surface layer base materials, the proportion of the reinforcing fibers is preferably from 20 to 90% by volume, more preferably from 30 to 80% by volume. When the matrix is a resin, % by volume is measured by the method described in JIS K7075 1991 (a test method of the fiber content and void ratio of carbon fiber reinforced plastic).

The matrix resin in the fiber reinforced resin forming said surface layer base materials is a thermoplastic resin. Examples of the thermoplastic resin of the surface layer base materials include polyolefins such as polyethylene (PE), polypropylene (PP), and polybutene; styrene-based resins such as polystyrene (PS), acrylonitrile-butadiene-styrene-copolymers (ABS), acrylonitrile-styrene-copolymer (AS); polyesters such as polyethylene terephthalate (PET), polybutylene terephthalate (PBT), polypropylene terephthalate (PTT), polyethylene naphthalate (PEN), liquid crystal polyester; polyoxymethylene (POM), polyamide (PA), polycarbonate (PC), polymethyl methacrylate (PMMA), polyvinyl chloride (PVC), polyphenylene sulfide (PPS), polyphenylene ether (PPE), modified PPE, thermoplastic polyimide (PI), polyamide-imide (PAI), polyetherimide (PEI), polysulfone (PSU), modified PSU, polyethersulfone (PES), polyketone (PK), polyetherketone (PEK), polyetheretherketone (PEEK), polyetherketoneketone (PEKK), polyarylate (PAR), polyether nitrile (PEN), thermoplastic phenol-based resins, phenoxy resin; fluorine resins such as polytetrafluoroethylene (PTFE); and polystyrene-based, polyolefin-based, polyurethane-based, polyester-based, polyamide-based, polybutadiene-based, polyisoprene-based, fluorine-based thermoplastic elastomers, etc.; copolymers and modifications thereof, blends, polymer alloys comprising two or more of the foregoing, etc.. Polycarbonate is preferred.

The first surface layer base material and the second surface layer base material are preferably formed of a carbon fiber reinforced polycarbonate materials respectively, more preferably of a sheet obtained by laminating two or more polycarbonate preimpregnated tapes of unidirectional carbon fibers. The two or more polycarbonate preimpregnated tapes of unidirectional carbon fibers may be arranged depending on the angle of the fiber arrangement directions, preferably in such a manner that the fiber arrangement directions are mutually orthogonal.

The first surface layer base material and the second surface layer base material may further comprise one or more polycarbonate preimpregnated woven fabrics of carbon fibers, or comprise a combination of one or more polycarbonate preimpregnated sheets of unidirectional carbon fibers and one or more polycarbonate preimpregnated woven fabrics of carbon fibers.

Said fiber reinforced thermoplastic resin of the surface layer base materials forming the molded composite article provided by the present invention shows flame retardancy.

The core layer may be composed of a soft and/or lightweight material, such as a resin material or the like. It is generally a resin having a good hot melt bonding property with the fiber reinforced resin material of the surface layer base materials. When the first surface layer base material and the second surface layer base material are preferably formed by fiber reinforced resin materials respectively, the core layer is preferably made of a softer material than the fiber reinforced resin forming the surface layer base materials.

As the soft material forming the core layer in the plate member, for example, a porous material such as a foamed material or a honeycomb material, a fiber sheet, and a resin sheet are used. If a foamed material and/or a honeycomb material is used, a lighter plate member can be obtained. The material of the soft material is not particularly limited. When the soft material is a thermoplastic resin, the above thermoplastic resin used in the process for forming the plate member can be used. From the viewpoint of weight reduction, polyolefin resins such as polypropylene (PP) or polyethylene (PE) are preferably used. From the viewpoint of adhesion to the surface layer base materials and the resin member, polycarbonate-based resins, polyester-based resins, polyvinyl alcohol-based resins, modified polyolefins, copolymers and polymer alloys thereof are preferably used. The soft material may also comprise reinforcing fibers such as glass fibers and carbon fibers, when the base material of the core layer is required to have a certain degree of rigidity.

The method for bonding the surface layer base materials to the core layer is not particularly limited. The molten core layer and surface layer base material may be bonded during thermal lamination, or may be bonded when an adhesive nonwoven or film is positioned between the surface layer base material and the core layer, or may also be bonded when an adhesive is applied on one or both of the base materials.

Fig. 2 is a schematic view of a plate member according to the present invention. As shown in Fig. 2, the plate member 200 comprises a plate body composed of a surface layer base material 210, a core layer 220, and a surface layer base material 230, and a joint end is positioned at a side end (left end shown in Fig. 2) of the plate member 200.

The joint end comprises an extension part of the surface layer base material 230, an undulating extension part of the surface layer base material 210, an undulating extension part of the core layer 220 at the position corresponding to the undulating extension part of the surface layer base material 210, and a portion of the core layer 220 that is bonded to the extension part of the surface layer base material 230 at the position that is not corresponding to the surface layer base material 210 (i.e., the remaining part of the core layer 220, after a portion of its thickness is removed). Since the remaining part of the core layer 220 has a relatively small thickness, it is not shown in Fig. 2. Said at least a portion of the extension part of the surface layer base material 230 at the joint end does not correspond to the surface layer base material 210.

The side end face of the joint end comprises an undulating surface 250 composed of the undulating side end face of the extension part of the surface layer base material 210 and the undulating side end face of the corresponding extension part of the core layer 220, and a side end face 240 composed of the flat side end face of the extension part of the surface layer base material 230 and the flat side end face of the corresponding remaining part of the core layer 220.

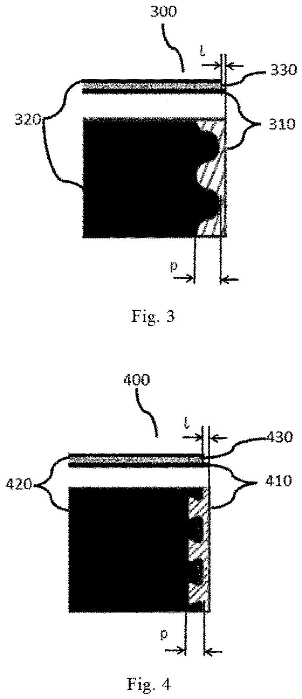

Figs. 3 - 4 are schematic views of other plate members according to the present invention, respectively.

Fig. 3 shows a top view and a side view of the plate member 300. The plate member 300 comprises a plate body composed of a surface layer base material 310, a surface layer base material 320 and a core layer 330, and a joint end composed of an extension part of the surface layer base material 310, an extension part of the core layer 330, and an extension part of the partial surface layer base material 320. In Fig. 3, the joint end is positioned at the right end of the plate body. The extension part of the core layer 330 comprises two parts. The first part is an undulating part corresponding to the extension part of the partial surface layer base material 320. The second part is a part that is bonded to the extension part of the surface layer base material 310 which does not correspond to the surface layer base material 320 (not shown in Fig. 3 since it has a relatively small thickness), i.e. the remaining part of the core layer 320 after a portion of the thickness is removed.

As shown in Fig. 3, the side end face of the extension part of the surface layer base material 310 at the joint end, which is bonded to the resin member, has an even surface. The side end face of the extension part of the surface layer base material 320 at the joint end has an undulating surface, and the distance between the crest of the protrusion of the undulating surface and the side end face of the extension part of the surface layer base material 310 is 1. The distance 1 may be approximately 0.5-1.5 mm, preferably 0.8-1.2 mm, more preferably 0.9-1.1 mm, such as 1 mm. The distance p between the trough of the recess and the crest of the protrusion of the undulating surface may be 3-8 mm, preferably 4-6 mm.

Fig. 4 shows a top view and a side view of the plate member 400. The plate member 400 comprises a plate body composed of a surface layer base material 410, a surface layer base material 420 and a core layer 430, and a joint end composed of an extension part of the surface layer base material 410, an extension part of the core layer 430, and an extension part of the partial surface layer base material 420 (right side in Fig. 4).

The extension part of the core layer 430 comprises an undulating portion corresponding to the extension part of the partial surface layer base material 420, and may further comprise a portion of the core layer 320 that is bonded to the extension part of the surface layer base material 410 that does not correspond to the surface layer base material 420, i.e. the remaining part of the core layer 420 after a portion of the thickness is removed.

As shown in Fig. 4, the side end face of the surface layer base material 410 at the joint end has an even surface. The side end face of the surface layer base material 420 has an undulating surface, and the distance between the crest of the protrusion of the undulating surface and the side end face of the surface layer base material 410 at the joint end is 1. The distance 1 may be approximately 0.5-1.5 mm, preferably 0.8-1.2 mm, more preferably 0.9-1.1 mm, such as 1 mm. The distance p between the trough of the recess and the crest of the protrusion of the undulating surface may be 3-8 mm, preferably 4-6 mm.

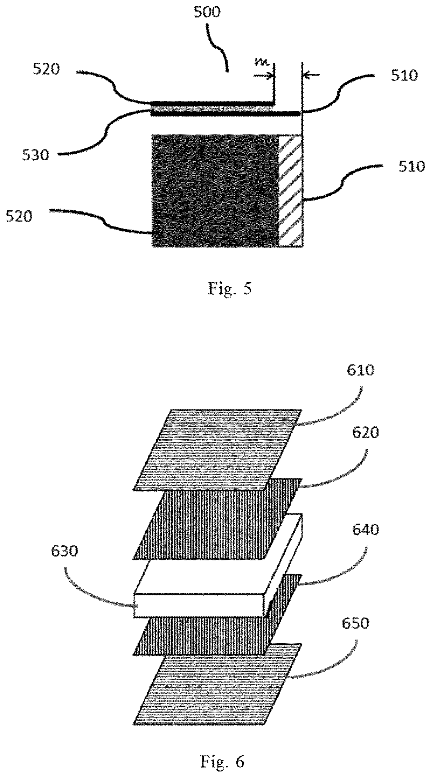

Fig. 5 is a schematic view of still another plate member according to the present invention. As shown in Fig. 5, the plate member 500 comprises a plate body composed of a surface layer base material 510, a surface layer base material 520 and a core layer 530, and a joint end composed of an extension part of the surface layer base material 510 and an extension part of the core layer 530, wherein the extension part of the core layer 530 is the remaining part after a portion of the thickness of the core layer at the joint end is removed (not shown in Fig. 5, since it has a relatively small thickness). The joint end of the plate member shown in Fig. 5 does not comprise the second surface layer base material 520.

As shown in Fig. 5, the side end face of the extension part of the surface layer base material 510 that is bonded to the resin member has an even surface. The side end face of the surface layer base material 520 of the plate body has also an even surface, and the distance away from the side end face of the extension part of the surface layer base material 510 that is bonded to the resin member may be approximately 0.5-1.5 mm, preferably 0.8-1.2 mm, more preferably 0.9-1.1mm, for example 1 mm.

### Method for producing a plate member

A method for producing a plate member provided by the present invention comprises the steps of: obtaining a plate comprising a first surface layer base material, a core layer and a second surface layer base material, with said core layer being positioned between the first surface layer base material and the second surface layer base material; and removing the second surface layer base material at the position corresponding to at least a portion of the first surface layer base material at a side end of the plate to form the plate body and the joint end.

The removing step of the method for producing the plate member may further comprise removing a portion of the thickness of the core layer at the position corresponding to the removed second surface layer base material. The remaining part of the core layer has a thickness of 0.05-0.1 mm, preferably 0.06-0.09 mm, more preferably 0.06-0.08mm.

Fig. 6 is a schematic view showing the structure of a plate for producing a plate member. As shown in Fig. 6, by way of example, the plate for producing the plate member may comprise a first surface layer base material obtained by laminating two thermoplastic preimpregnated tapes of unidirectional carbon fibers 610 and 620 in such a manner that fiber arrangement directions thereof are mutually orthogonal, a core layer 630, and a second surface layer base material obtained by laminating two thermoplastic preimpregnated tapes of unidirectional carbon fibers 640 and 650 in such a manner that fiber arrangement directions thereof are mutually orthogonal. The thermoplastic preimpregnated tapes of unidirectional carbon fibers may be, for example, the product CFFR1000T 170-000/44 from Covestro Germany Co., Ltd., or the like.

Removing the second surface layer base material at the position corresponding to a portion of the first surface layer base material at one end of the plate by a suitable process for a plate, such as cutting, peeling, milling or planing, or further removing all or a portion of thickness of the corresponding core layer may result in a desired plate member.

For example, it can be achieved by the following steps: Firstly, a plate is trimmed into a blank with a suitable size and shape according to the product design. The blank comprises a side end face. Secondly, a portion of the second surface layer base material of the side end face of the blank at the position corresponding to the first surface layer base material is removed by a process such as cutting, peeling, milling, and/or planing, or further, all or a portion of the thickness of the core layer is removed to form the plate body and the joint end, obtaining the plate member.

The side end face of the extension part of the first surface layer base material at the joint end may have an even surface, such as a regular quadrangle plane, or may have a curved surface, such as an undulating surface.

When the first surface layer base material forms a surface of the molded composite article, the side end face of the first surface layer base material at the joint end is preferably flat, so that as few bonding trails as possible may be left on the surface of the molded composite article, for example, only one straight line segment instead of a longer curved line segment. Thus, not only the productivity, yield of products, but also the product appearance will be improved.

If the first surface layer base material forms an inner surface of the molded composite article, the side end face of the first surface layer base material at the joint end is preferably a regular or irregular, preferably regular, undulating surface in order to enhance the bonding strength with the resin member without adverse effect on the appearance.

The side end face of the second surface layer base material of the plate member at the joint end may have a flat or undulating shape, or other curved shape that is advantageous for enhancing the bonding with the resin member. When the second surface layer base material forms an outer surface of the plate member, the side end face of the second surface layer base material of the plate member at the joint end has preferably an even surface. When the second surface layer base material forms an inner surface of the plate member, the side end face of the second surface layer base material of the plate member at the joint end has preferably an undulating surface.

In the present invention, the undulating surface may be a curved surface as shown in Figs. 2 - 5, or may be a curved surface in a shape as disclosed in Figs. 6 - 10 of CN101835596B and the related context thereof in the specification.

### Resin member

The molded composite article provided by the present invention comprises a resin member.

The resin used for the resin member is not particularly limited. However, a thermoplastic resin is preferably used from the viewpoint of the production by injection molding or the like and bonding shape.

As the thermoplastic resin used for forming the resin member, the above-mentioned thermoplastic resin used in the process of forming the plate member can be used. Polyphenylene sulfide (PPS) is more preferably used from the viewpoint of the heat resistance and chemical resistance. Polycarbonate (PC) and polyphenylene ether (PPE) and styrene resins are more preferably used from the viewpoint of the appearance and dimensional stability of the molded article. Polyamide (PA) is more preferably used from the viewpoint of the strength and impact resistance of the molded article.

The resin member may be formed of a fiber reinforced resin. The reinforcing fibers in the fiber reinforced resin forming the resin member are glass fibers or carbon fibers. In order to increase the strength and rigidity of the molded composite article, it is also preferable to use a resin containing reinforcing fibers as the resin of the resin member. Said reinforcing fibers may be a reinforcing fiber exemplified and represented as described above. When the resin member is required to show electric wave permeability, it is also preferable to use non-conductive glass fibers as the reinforcing fibers. A chopped glass fiber reinforced polycarbonate resin is preferably used as an injection molding material for the resin member, such as the resin material GF9020 manufactured by Covestro Germany Co., Ltd.

The thickness of the resin member is preferably the same as that of the joint end of the plate member within the error range.

The resin member may include one or more structural components such as snap joints, bosses, ribs, etc.

The resin member in the molded composite article provided according to the present invention shows preferably flame retardancy.

### Molded composite article

The present invention provides a molded composite article. The molded composite article comprises a plate member and a resin member, wherein the plate member comprises a plate body and a joint end, the plate body comprises a first surface layer base material, a core layer and a second a surface layer base material, the core layer is positioned between the first surface layer base material and the second surface layer base material, the joint end is positioned at a side end of the plate body, the joint end comprises an extension part of the first surface layer base material, at least a portion of the joint end does not comprise the second surface layer base material at the position corresponding to the extension part of the first surface layer base material, and the joint end is bonded to a side end of the resin member.

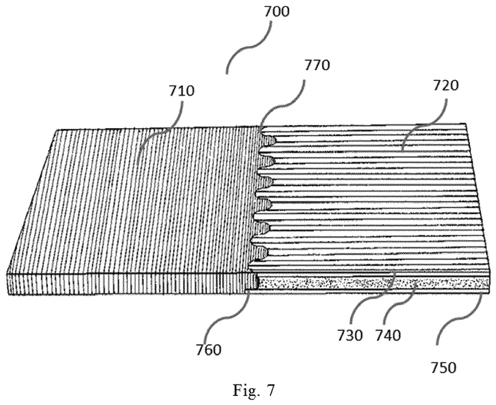

Fig. 7 is a schematic view of a molded composite article according to the present invention. As shown in Fig. 7, the molded composite article 700 comprises a resin member 710 and a plate member 720.

The plate member 720 comprises a plate body composed of the surface layer base materials 730, 750 and the core layer 740, and a joint end composed of an undulating extension part of the surface layer base material 730, an undulating extension part of the core layer 740 corresponding to the extension part of the surface layer base material 730, the extension part of the surface layer base material 750, and a portion of the core layer 740 which is bonded to the extension part of the surface layer base material 750 not corresponding to the surface layer base material 730 (i.e., the remaining part of the core layer 220 after a portion of the thickness of the extension part of the core layer 740 at the joint end is removed). Since the remaining part of the core layer 740 has a relatively small thickness, it is not shown in Fig. 7.

The side end face of the extension part of the surface layer base material 730 and the extension part of the core layer 740 corresponding thereto constitute an undulating surface 770 together. The side end face of the extension part of the surface layer base material 750 has an even surface 760. The flat side end face 760 and the undulating surface 770 are bonded to the resin member 710. A predetermined distance is left between the crest of the protrusion of the undulating surface 770 and the even surface 760. Thus, the surface layer base material 750 and the remaining part of the core layer 740 are present at the position corresponding to the recess of the undulating surface 770 and between the crest of the protrusion thereof and the flat side end face 760 (not shown in Fig. 7), while the surface layer base material 730 is absent at corresponding positions. In this way, the remaining part of the core layer can also be bonded to the resin member 710, which improves the bonding strength.

When the surface layer base material 750 forms a surface of the molded composite article, the bonding line present between the resin member 710 and the plate member 720 is merely a straight line segment, which is beautiful and improves the yield of products.

### Method for producing a molded composite article

The invention provides a method for producing a molded composite article, wherein the molded composite article comprises a plate member and a resin member, the plate member comprises a plate body and a joint end, the plate body comprises a first surface layer base material, a core layer and a second surface layer base material, the core layer is positioned between the first surface layer base material and the second surface layer base material, the joint end is positioned at a side end of the plate body, the joint end comprises an extension part of the first surface layer base material, at least a portion of the joint end does not comprise the second surface layer base material at the position corresponding to the extension part of the first surface layer base material, and the joint end is bonded to a side end of the resin member, wherein the method comprises the steps of: obtaining the plate member, placing the plate member in a mold, closing the mold, injecting a resin and molding, opening the mold, and obtaining the molded composite article.

The plate member is obtainable according to the method for producing a plate member provided by the present invention.

The plate member is placed in a mold comprising an interspace in which the resin member can be formed between the plate member and the inner wall of the mold.

After the mold is closed, injection molding is carried out, wherein the resin is injected into the mold. The resin forms the resin member in the mold.

The mold is opened and the product is removed from the mold. The molded composite article provided by the present invention is obtained, after removing the tailings (if any) formed by the residual material remaining in the resin flow path in the injection molding process and the burrs (if any) formed at the mold parting line, if desired.

The present invention also provides the use of the molded composite article provided according to the present invention in the production of electronic products, for example, as a casing of an electronic product.

The present invention also provides an electronic product comprising a molded composite article provided according to the present invention.

The electronic product may be an electrical or electronic device such as a portable personal computer, a mobile phone, a copying machine, a printer, or the like.

The molded composite article of the present invention is characterized in thin wall, light weight, high rigidity, high strength, high yield of products, good appearance, and recyclability due to the joint of the resin member and the joint end of the plate member.

### Examples

The following examples are intended to be illustrative without limitation. The materials, equipment, samples and test conditions used in the examples are briefly described below.

### 1. Production of plate members

The surface layer base material was formed of a material obtained by laminating two thermoplastic preimpregnated sheets of unidirectional carbon fibers CF FR1000T 170-000/44 (manufactured by Covestro Germany Co., Ltd., polycarbonate as matrix resin), in which fiber arrangement directions thereof are mutually orthogonal.

The material of the core layer was a foam obtained by 2-fold foaming using Makrolon® polycarbonate (manufactured by Covestro Germany Co., Ltd.) and Clariant HYDROCEROL® chemical foaming agent.

Said two surface layer base materials and the core material positioned therebetween were laminated (lamination temperature: 180 ° C, pressure: 5 MPa, pressurization time: 5 minutes), and then subjected to a process such as cutting. A 150 mm x 75 mm x 1.5 mm plate was obtained, which is used to make a plate member.

The plate was trimmed into a blank with an appropriate size and shape by a CNC (Computer Numerical Control) machine.

The second surface layer base material at the position corresponding to a portion of the first surface layer base material at a side end of the blank and a corresponding portion of the thickness of the core layer were removed. A joint end was formed at a side end of the blank. The remaining part of the blank was used as a plate body. Thus, a plate member was obtained.

The plate members produced in Examples 1-4 are shown in Figs. 3 - 5 respectively and described in Table 1.

The plate members produced in Comparative Example 1 is shown in Fig. 1 and described in Table 1.

### 2. Production of molded composite articles by injection molding

A chopped glass fiber reinforced polycarbonate resin GF9020 (manufactured by Covestro Germany Co., Ltd.) was used as an injection molding material for the resin member. The plate member was placed in the cavity of the mold of injection molding. The injection molding was carried out after the mold was closed. The molded composite article was obtained after opening the mold.

### 3. Test of tensile breaking strength

Tensile breaking strength (mechanical strength) was tested using the following experimental apparatus, test sample, and experimental conditions.
Name of the experimental equipment: Universal Tester (Zwick/Roell), model Z050.
Test sample: A test sample having a width (along the joint portion) of 40 mm and a length (perpendicular to the joint portion) of 50 mm was cut out from the joint portion between the resin member and the plate member.
Distance between the clamps: 30mm
Test speed: 5mm/min.

The test results are listed in Table 1.

**Table 1 Examples 1-4 and Comparative Example 1**

| | Material or structure | Ex 1 | Ex 2 | Ex. 3 | Ex. 4 | Comp. 1 |
|---|---|---|---|---|---|---|
| Surface layer base material | CF FR1000T 170-000/44 | | | | | |
| Core layer base material | 2x extrusion foamed foam using Makrolon® polycarbonate and Clariant Hydrocerol® chemical foaming agent | | | | | |
| Resin member | polycarbonate resin GF9020 was used | | | | | |
| | Illustration of plate members | Fig. 3 **l**=1mm p=4mm | Fig. 4 **l**=1mm p=4mm | Fig. 4 **l**=1mm p=6mm | Fig. 5 **m**=1mm | Fig. 1 p=4mm |
| | Whether or not the second surface layer base material is partially shorter than the first surface layer base material at the joint end | yes | yes | yes | yes | no |
| | Whether or not the end face of the second surface layer base material has an undulating surface | yes | yes | yes | no | yes |
| Mechanical strength | Tensile breaking strength (unit: N) | 2040 | 1680 | 1880 | 1710 | 1400 |

According to the comparison between the tensile breaking test results of Examples 1-4 and Comparative Example 1, the bonding strength between the plate member and the resin member of the molded composite article provided by the present invention was greatly improved. In Example 4, even if the bonding surfaces of the first surface layer base material, the second surface layer base material and the resin member were all flat, the tensile breaking strength of the sample had a value of 1710 N. It was greatly improved in comparison to the tensile breaking strength of the sample in Comparative Example 1, which had a value of 1400 N.

The thickness of the molded composite article obtained in Examples 1-4 was consistent with that of the plate member. Therefore, a thin wall and higher bonding strength can be provided by the technical solution of the present invention.

The bonding between the joint end of the plate member and the resin member improved the surface appearance of the molded composite article.

The resin member and the core layers of the plate member are preferably formed of thermoplastic materials. Therefore, it not only improves the bonding strength between the different members, but also omits additional processing steps, reduce the production cost, and makes the molded composite recyclable.

While the present invention including the objects of the present invention have been described in detail as above, it should be understood that the detailed description is merely illustrative. In addition to what is defined by the claims, various changes can be made by those skilled in the art without departing from the spirit and scope of the invention.

## Claims

1. A plate member comprising a plate body and a joint end, wherein the plate body comprises a first surface layer base material, a core layer and a second surface layer base material, the core layer is positioned between the first surface layer base material and the second surface layer base material, the joint end is positioned at a side end of the plate body, the joint end comprises an extension part of the first surface layer base material, and at least a portion of the joint end does not comprise the second surface layer base material at the position corresponding to the extension part of the first surface layer base material.

2. The plate member according to claim 1, wherein at least a portion of the joint end further comprises a portion of the core layer that is bonded to the extension part of the first surface layer base material, and the portion of the core layer has a thickness of 0.05-0.1mm, preferably 0.06-0.09mm, more preferably 0.06-0.08mm.

3. The plate member according to claim 1 or 2, wherein the side end face of the extension part of the first surface layer base material has an even surface or an undulating surface, and preferably has an even surface when the first surface layer base material forms an outer surface of the plate member.

4. The plate member according to claim 3, wherein a portion of the joint end further comprises an extension part of the second surface layer base material, the side end face of the extension part of the second surface layer base material has an even surface or an undulating surface, and preferably has an undulating surface when the second surface layer base material forms an inner surface of the plate member, and the distance between the crest of the protrusion and the trough of the recess of the undulating surface is 2-9 mm, preferably 3-8 mm, more preferably 4-6 mm.

5. The plate member according to claim 4, wherein the distance between the even surface or the crest of the protrusion of the undulating surface and the side end face of the extension part of the first surface layer base material is 0.5-1.5mm, preferably 0.8-1.2 mm, more preferably 0.9-1.1mm.

6. The plate member according to claim 1 or 2, wherein the first surface layer base material or the second surface layer base material is a carbon fiber reinforced polycarbonate plate.

7. The plate member according to claim 6, wherein the carbon fiber reinforced polycarbonate plate comprises two or more polycarbonate preimpregnated tapes of unidirectional carbon fibers, with the two or more tapes being preferably arranged in such a manner that the fiber directions thereof are mutually orthogonal; or comprises one or more polycarbonate preimpregnated woven fabrics of carbon fibers; or comprises one or more polycarbonate preimpregnated tapes of unidirectional carbon fibers and one or more polycarbonate preimpregnated woven fabrics of carbon fibers.

8. A method for producing a plate member according to claims 1-7, comprising the steps of: obtaining a plate comprising a first surface layer base material, a core layer and a second surface layer base material, with said core layer being positioned between the first surface layer base material and the second surface layer base material; and removing at least a portion of the second surface layer base material at a side end of the plate to form the plate body and the joint end.

9. The method according to claim 8, wherein said removing comprises one or more of the followings: cutting, peeling, milling, and planing.

10. The method according to claim 8 or 9, wherein said removing further comprises removing a portion of the thickness of the core layer at the position corresponding to said at least a portion of the second surface layer base material, and the remaining portion of the core layer has a thickness of 0.05-0.1 mm, preferably 0.06-0.09 mm, more preferably 0.06-0.08mm.

11. A molded composite article comprising a plate member and a resin member, wherein the plate member comprises a plate body and a joint end, the plate body comprises a first surface layer base material, a core layer and a second a surface layer base material, the core layer is positioned between the first surface layer base material and the second surface layer base material, the joint end is positioned at a side end of the plate body, the joint end comprises an extension part of the first surface layer base material, at least a portion of the joint end does not comprise the second surface layer base material at the position corresponding to the extension part of the first surface layer base material, and the joint end is bonded to a side end of the resin member.

12. The molded composite article according to claim 11, wherein at least a portion of the joint end comprises a portion of the core layer that is bonded to the extension part of the first surface layer base material, and the portion of the core layer has a thickness of 0.05-0.1mm, preferably 0.06-0.09mm, more preferably 0.06-0.08mm.

13. The molded composite article according to claim 12, wherein the side end face of the extension part of the first surface layer base material has an even surface or an undulating surface, and preferably has an even surface when the first surface layer base material forms an outer surface of the plate member.

14. The molded composite article according to claim 11 or 13, wherein a portion of the joint end further comprises an extension part of the second surface layer base material, the side end face of the extension part of the second surface layer base material has an even surface or an undulating surface, and preferably has an undulating surface when the second surface layer base material forms an inner surface of the plate member, the distance between the crest of the protrusion and the trough of the recess of the undulating surface is 2-9 mm, preferably 3-8 mm, more preferably 4-6 mm.

15. The molded composite article according to claim 14, wherein the distance between the even surface or the crest of the protrusion of the undulating surface and the side end face of the extension part of the first surface layer base material is 0.5-1.5mm, preferably 0.8-1.2 mm, more preferably 0.9-1.1mm.

16. The molded composite article according to claim 11, wherein the first surface layer base material or the second surface layer base material is a carbon fiber reinforced polycarbonate plate.

17. The molded composite article according to claim 16, wherein the carbon fiber reinforced polycarbonate plate comprises two or more polycarbonate preimpregnated tapes of unidirectional carbon fibers, with the two or more tapes being preferably arranged in such a manner that the fiber directions thereof are mutually orthogonal; or comprises one or more polycarbonate preimpregnated woven fabrics of carbon fibers; or comprises one or more polycarbonate preimpregnated tapes of unidirectional carbon fibers and one or more polycarbonate preimpregnated woven fabrics of carbon fibers.

18. The molded composite article according to claim 11, wherein the tensile breaking strength of the bonding between the plate member and the resin member is not less than 1500 N, preferably not less than 1600 N, more preferably not less than 1700 N (determined using a test sample having a width of 40 mm and a length of 50 mm, a clamp distance of 30 mm, and a tensile test speed of 5 mm/min).

19. A method for producing a molded composite article, the molded composite article comprising a plate member and a resin member, the plate member comprising a plate body and a joint end, the plate body comprising a first surface layer base material, a core layer and a second surface layer base material, the core layer being positioned between the first surface layer base material and the second surface layer base material, and the joint end being positioned at a side end of the plate body, wherein the joint end comprises an extension part of the first surface layer base material, at least a portion of the joint end does not comprise the second surface layer base material at the position corresponding to the extension part of the first surface layer base material, and the joint end is bonded to a side end of the resin member, and wherein the method comprises the steps of: obtaining the plate member, placing the plate member in a mold, closing the mold, injecting a resin and molding, opening the mold, and obtaining the molded composite article.

20. The method for producing a molded composite article according to claim 19, wherein the plate member is produced as follows: obtaining a plate comprising a first surface layer base material, a core layer and a second surface layer base material, with the core layer being positioned between the first surface layer base material and the second surface layer base materials; and removing the second surface layer base material at the position corresponding to at least a portion of the first surface layer base material at a side end of the plate to form the plate body and the joint end.

21. The method for producing a molded composite article according to claim 19 or 20, wherein the carbon fiber reinforced polycarbonate plate comprises two or more polycarbonate preimpregnated tapes of unidirectional carbon fibers, with the two or more tapes being preferably arranged in such a manner that the fiber directions thereof are mutually orthogonal; or comprises one or more polycarbonate preimpregnated woven fabrics of carbon fibers; or comprises one or more polycarbonate preimpregnated tapes of unidirectional carbon fibers and one or more polycarbonate preimpregnated woven fabrics of carbon fibers.

22. Use of a plate member according to any one of claims 1-7 in the production of electronic products.

23. Use of a molded composite article according to any one of claims 11-18 in the production of electronic products.

24. An electronic product casing comprising a molded composite article according to any one of claims 11-18.

25. An electronic product comprising an electronic product casing of claim 24.
